# EUROPEAN PATENT SPECIFICATION

(11) **EP 4 415 466 B1**
(45) Date of publication and mention of the grant of the patent: **19.08.2026**
(21) Application number: 22877987.2
(22) Date of filing: 09.10.2022
(51) Int. Cl.: H04W 74/00, H04L 1/08, H04L 5/00, H04W 74/0833

(54) **PRACH REPEATED TRANSMISSION METHODS, TERMINAL AND NETWORK SIDE DEVICE**
VERFAHREN ZUR WIEDERHOLTEN PRACH-ÜBERTRAGUNG, ENDGERÄT UND NETZWERKSEITIGE VORRICHTUNG
PROCÉDÉS DE TRANSMISSION RÉPÉTÉE DE PRACH, TERMINAL ET DISPOSITIF CÔTÉ RÉSEAU

(30) Priority: 09.10.2021 CN 202111178133
(43) Date of publication of application: 14.08.2024
(60) Divisional application: 25169191.1 / 4 561 247
(73) Proprietor: Vivo Mobile Communication Co., Ltd., Dongguan, Guangdong 523863 (CN)
(72) Inventor: WU, Kai, Dongguan, Guangdong 523863 (CN); WANG, Lihui, Dongguan, Guangdong 523863 (CN)
(74) Representative: Murgitroyd & Company
(86) International application number: PCT/CN2022/124101
(87) International publication number: WO 2023/056973

(56) References cited:
- WO-A1-2020/165141
- WO-A1-2020/191635
- WO-A1-2021/013165
- CN-A- 106 686 691
- CN-A- 110 337 835
- CN-A- 111 867 129
- US-A1- 2021 112 604
- US-A1- 2021 289 558
- SAMSUNG: "Handling Preambles not associated with PRUs", 3GPP DRAFT; R2-2000225, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20200224 - 20200228, 13 February 2020 (2020-02-13), Mobile Competence Centre ; 650, route des Lucioles ; F-06921 Sophia-Antipolis Cedex ; France , XP051848515

## Description

### TECHNICAL FIELD

This application pertains to the field of communications technologies, and in particular, relates to PRACH repetition transmission methods, a terminal, and a network-side device.

### BACKGROUND

Physical random access channel (Physical random-access channel, PRACH) repetition transmission is a method for improving PRACH coverage. However, for existing PRACH resource (including random access channel transmission occasion (RACH occasion, RO for short) and preamble (preamble, also referred to as pilot sequence)) selection, terminals have relatively large freedom, and resources selected by a terminal cannot possibly support PRACH repetition transmission for the terminal, resulting in random access failure.

Document WO 2020191635 A1 discloses that a message retransmission method includes a terminal device obtaining a resource for retransmitting a message, and retransmitting the message based on the size relationship between the resource and the data carried in the message.

### SUMMARY

Embodiments of this application provide a PRACH repetition transmission method, a terminal, and a network-side device, so as to resolve the problem that resources selected by a terminal cannot possibly support PRACH repetition transmission for the terminal, resulting in random access failure

According to a first aspect, a PRACH repetition transmission method is provided, performed by a terminal, which is defined in claim 1.

According to a second aspect, a PRACH repetition transmission method is provided, performed by a network-side device, which is defined in claim 7.

According to a third aspect, a PRACH repetition transmission apparatus is provided, which is defined in claim 12.

According to a fourth aspect, a PRACH repetition transmission apparatus is provided, which is defined in claim 14

Further advantageous embodiments of the present disclosure are indicated in the dependent claims. It is to be understood that both the foregoing general description and the following detailed description are exemplary only, and are not restrictive of the present disclosure.

### BRIEF DESCRIPTION OF DRAWINGS

FIG. 1 is a structural diagram of a wireless communication system to which the embodiments of this application are applicable;
FIG. 2 is a first schematic diagram of an association relationship between ROs and SSBs;
FIG. 3 is a second schematic diagram of an association relationship between ROs and SSBs;
FIG. 4 is a first schematic flowchart of a PRACH repetition transmission method according to an embodiment of this application;
FIG. 5 is a first schematic diagram of a RO set according to an embodiment of this application;
FIG. 6 is a second schematic diagram of a RO set according to an embodiment of this application;
FIG. 7 is a second schematic flowchart of a PRACH repetition transmission method according to an embodiment of this application;
FIG. 8 is a first schematic structural diagram of a PRACH repetition transmission apparatus according to an embodiment of this application;
FIG. 9 is a second schematic structural diagram of a PRACH repetition transmission apparatus according to an embodiment of this application;
FIG. 10 is a schematic structural diagram of a communication device according to an embodiment of this application;
FIG. 11 is a schematic diagram of a hardware structure of a terminal for implementing the embodiments of this application; and
FIG. 12 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

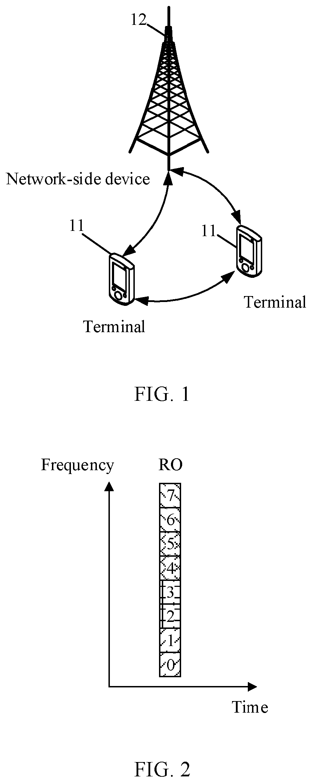

FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

In the prior art, there are contention-based random access procedure and contention-free random access procedure.

In the contention-based random access procedure, also known as 4-step RACH, UE first sends msg1 including a preamble to a network-side device; after detecting the preamble, the network sends msg2, including a random access response (Random Access Response, RAR) message corresponding to the preamble; after receiving the msg2, the UE sends msg3 according to an indication in the RAR; and after receiving the msg3, the network sends msg4, including a contention resolution ID (contention resolution ID). Upon receiving the msg4, the UE completes 4-step random access.

The network adds uplink (Uplink, UL) grant (grant) information to the RAR to indicate scheduling information for MSG3 physical uplink shared channel (Physical Uplink Shared Channel, PUSCH), and adds information such as a random access preamble ID (RACH preamble ID, RAPID), a temporary cell radio network temporary identifier (Temporary Cell Radio Network Temporary Identifier, TC-RNTI), and a timing advance (Timing Advance, TA). If the network receives no MSG3 PUSCH, retransmission of the MSG3 PUSCH may be scheduled on a physical downlink control channel (Physical Downlink Control Channel, PDCCH) scrambled by TC-RNTI.

For the contention-based random access procedure, different UEs randomly select preambles for transmission, and different UEs may select a same preamble for transmission on a same resource, triggering a contention-based random access procedure. Such case may be understood as a preamble collision between UEs. In this case, different UEs may receive a same RAR, and then different UEs may transmit MSG3 PUSCH based on scheduling information in the RAR UL grant. Because the prior art does not support repetition transmission of MSG3 PUSCH, the network can parse out a PUSCH transmitted only by one UE on one MSG3 PUSCH scheduling resource. In this way, the network may add a contention resolution ID to MSG4 physical downlink shared channel (Physical Downlink Shared Channel, PDSCH) to match a common control channel (Common Control Channel, CCCH) service data unit (Service Data Unit, SDU) sent by the UE in MSG3 PUSCH. In this case, the UE considers the contention resolution successful and uses the TC-RNTI as a cell radio network temporary identity (Cell Radio Network Temporary Identity, C-RNTI) of the UE. If it is not matched, the contention resolution is considered unsuccessful.

If the contention resolution is unsuccessful, RACH transmission resource selection is performed again for PRACH transmission, so as to perform a next random access attempt.

In NR, a base station may configure a plurality of FDM PRACH transmission occasions (physical random access channel transmission occasion, or referred to as PRACH occasion), which is referred to as RO here for simplicity, at one time domain position for PRACH transmission. The number of FDM ROs on one time (time) instance (instance) may be {1,2,4,8}.

A random access preamble (RACH preamble) can be transmitted only on a time domain resource configured by a PRACHConfigurationIndex parameter, and the random access preamble can be transmitted only on a frequency domain resource configured by a prach-FDM parameter. The PRACH frequency domain resource is *n*_{RA} ∈ {0,1,...*,M*-1} , where M is equal to the higher-layer parameter prach-FDM. During initial access, PRACH frequency domain resources *n*_{RA} are numbered in ascending order from a lowest-frequency RO resource in an initial active uplink bandwidth part (initial active uplink bandwidth part); otherwise, the PRACH frequency domain resources *n*_{RA} are numbered in ascending order from a lowest-frequency RO resource in an active uplink bandwidth part (active uplink bandwidth part).

In NR, there is an association relationship between a RO and an actually transmitted SSB (SS/PBCH block, synchronous signal/physical broadcast channel block, sometimes simply referred to as SS block, synchronous signal block). One RO may be associated with a plurality of SSBs, or a plurality of SSBs may be associated with one RO. Generally, different SSBs may use different beams for transmission, and the terminal may alternatively perform PRACH repetition transmission by using a beam matching the SSB on a RO of the associated SSB.

FIG. 2 is a first schematic diagram of an association relationship between ROs and SSBs. As shown in FIG. 2, the number of FDM ROs on one time instance is 8, and the number of SSBs actually transmitted is 4. For example, corresponding SSBs are SSB#0, SSB#1, SSB#2, and SSB#3, and each SSB is associated with two ROs. If the UE transmits a PRACH on a RO corresponding to SSB#0, the UE selects one RO from RO#0 and RO#1 to transmit the PRACH.

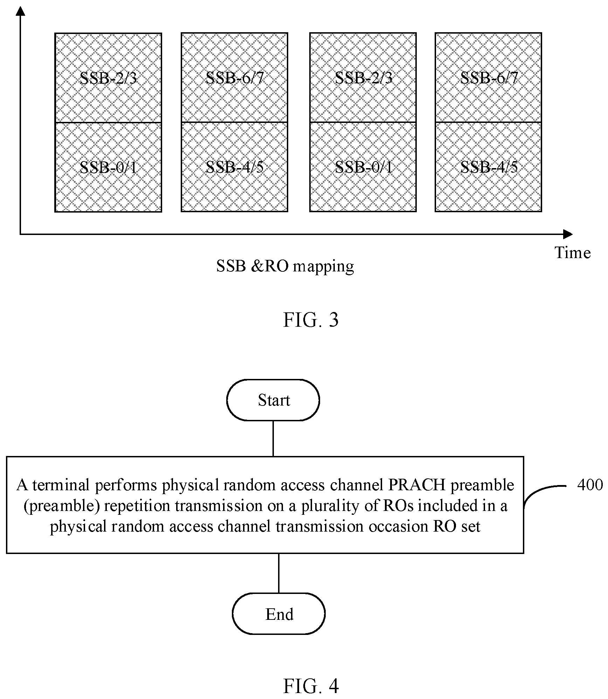

FIG. 3 is a second schematic diagram of an association relationship between ROs and SSBs. As shown in FIG. 3, the number of FDM ROs on one time instance is 2, and the number of SSBs actually transmitted is 8. For example, corresponding SSBs are SSB#0, SSB#1, ..., and SSB#7, and every two SSBs are associated with one RO. When a plurality of SSBs share one RO, preamble sets associated with the plurality of SSBs are different.

It should be noted that boxes shown in FIG. 2 and FIG. 3 are ROs, and SSBs marked in the boxes are SSBs associated with the ROs.

Before transmitting a PRACH, the UE first performs resource selection to select a RO corresponding to an SSB whose RSRP is higher than a threshold. If a plurality of SSBs are higher than the threshold, the terminal may select any one SSB. After the SSB is determined, if the SSB is associated with a plurality of ROs, the terminal may select any one RO for PRACH transmission; and perform PRACH transmission in the RO by using one preamble randomly selected from a preamble set associated with the SSB.

If supporting PRACH repetition, the terminal may select a RO associated with a plurality of SSBs to perform PRACH repetition transmission, and different beams may be used for the plurality of SSBs for transmission. In this way, the terminal may alternatively perform PRACH transmission by using different beams on ROs associated with different SSBs.

Under the existing framework, the following problems exist for supporting PRACH repetition transmission:
1. ROs associated with SSBs may be FDM resources. The terminal cannot perform PRACH transmission on FDM RO resources at a same time, and therefore selecting a RO combination associated with a combination of part of SSBs cannot be implemented. For example, ROs associated with SSB#0 and SSB#2 in FIG. 3 are in an FDM relationship, so it may be necessary to limit an SSB combination and/or RO combination used when the terminal performs PRACH repetition transmission.
2. Under the existing framework, a preamble selected by the terminal on each RO is randomly selected from a preamble set associated with the SSB. If PRACH repetition transmission is supported and preambles used for PRACH repetition transmission are all random, the network cannot determine whether the PRACH repetition transmissions are from same UE, and can neither perform reception and combination to improve the reception performance.
3. In a case of PRACH repetition transmission on a plurality of ROs, what kind of RA-RNTI the terminal uses for monitoring RAR(MSG2) needs to be further clarified. In an existing case that one PRACH transmission is performed by using only one RO, calculation of the RA-RNTI is deterministic.

To resolve the above problems, the embodiments of this application provide a PRACH repetition transmission method, a terminal, and a network-side device.

With reference to the accompanying drawings, the following describes in detail, by using some embodiments and application scenarios thereof, a PRACH repetition transmission method, a terminal, and a network-side device provided in the embodiments of this application.

FIG. 4 is a first schematic flowchart of a PRACH repetition transmission method according to an embodiment of this application. As shown in FIG. 4, the method includes the following step.

Step 400: A terminal performs physical random access channel PRACH preamble (preamble) repetition transmission on a plurality of ROs included in a physical random access channel transmission occasion RO set.

To resolve the problem that a resource selected by the terminal cannot be used to implement PRACH repetition transmission, resulting in a random access failure, this embodiment of this application limits an occasion for PRACH preamble repetition transmission of the terminal to a RO set. A plurality of ROs on which the terminal performs PRACH repetition transmission may be defined as a RO set (RO set or RO bundle or RO CE set, where CE is coverage enhancement Coverage enhancement).

Optionally, the method further includes:
obtaining parameters of the RO set, and determining the RO set based on the parameters of the RO set.

It can be understood that before the terminal performs PRACH preamble repetition transmission on the plurality of ROs contained in the RO set, the terminal needs to determine the RO set, specifically determining the RO set based on the parameters of the RO set.

Optionally, the parameters of the RO set include at least one of the following:
an index value of a synchronization signal block SSB associated with the plurality of ROs;
a time resource in which a RO usable for PRACH repetition transmission is located; and
a frequency resource in which a RO usable for PRACH repetition transmission is located.

Optionally, the parameters of the RO set are determined according to a configuration from a network-side device and/or according to a preset rule.

In this embodiment of this application, the configuration from the network-side device may be replaced by an indication of the network-side device.

Optionally, the RO set contains k SSB-associated ROs, where k meets: 1<k<=L, where L is the number of SSBs sent by a serving cell, and L is configured by the network-side device.

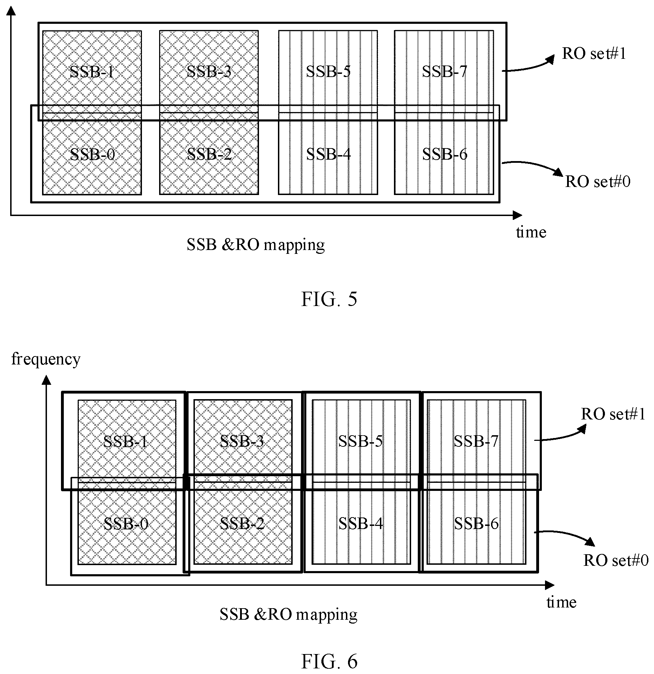

For example, eight SSBs, namely SSB#0, SSB#1, ..., and SSB#7, have been transmitted in the cell and the network may indicate that an index value combination of SSBs associated with a RO for PRACH repetition is {SSB#0,SSB#2,SSB#4,SSB#6}, or {SSB#1,SSB#3,SSB#5,SSB#7}, or another index value combination, as shown in FIG. 5.

Optionally, SSBs associated with the plurality of ROs contained in the RO set may be the same or different.

The network can arbitrarily indicate the number of and index values of associated SSBs in the RO set to reach the maximum number of repetitions and achieve flexibility of PRACH transmission associated SSBs.

Alternatively, the network may indicate a time position and/or frequency position of a RO, which may be indicated in a manner of time index and/or frequency index, for example, the network may indicate a frequency index value combination and/or time index value combination of a plurality of ROs, for example, {(f_idx0, t_idx0),(f_idx1, t_idx1),(f_idx2, t_idx2),(f_idx3, t_idx3)}.

It can be understood that the plurality of ROs contained in the RO set may be used for PRACH repetition transmission.

Optionally, the configuration from the network-side device includes an explicit or implicit configuration by the network-side device through downlink control information (Downlink Control Information, DCI), media access control (Media Access Control, MAC) control element (Control Element, CE), radio resource control (Radio Resource Control, RRC), or other higher-layer signaling.

In this embodiment of this application, the parameters of the RO set are indicated in a manner of configuration from the network-side device, featuring relatively high flexibility. This can prevent the terminal from performing PRACH repetition transmission on a plurality of FDM ROs at a same time, and avoid the terminal from randomly selecting a RO combination for PRACH repetition transmission or from selecting too many ROs for PRACH repetition transmission, thus reducing a probability of PRACH collision and improving a capacity of PRACH.

Optionally, the terminal determines the parameters of the RO set by using a preset rule, where the preset rule includes at least one of the following:
an index value of an SSB with value of mod(SSB index, M) being equal is used as the index value of the SSB associated with the plurality of ROs, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

In an implementation, SSBs whose index values associated with the plurality of ROs meet values of mod(SSB index, M) being equal are SSBs associated with the plurality of ROs, where M is an integer, and M is a predefined value or M may be determined according to the configuration from the network-side device; and
mod(SSB index,m) represents a result of SSB index modulo M.

For example, if the plurality of ROs associated with SSB indexes with a same value of mod(SSB index, 2) are a plurality of ROs in one RO set, mod(SSB index, 2) of SSB#0, SSB#2, SSB#4, and SSB#6 are all 0s, belonging to a same RO set. In this case, mod(SSB index, 2) of SSB#1, SSB#3, SSB#5, and SSB#7 are all 1s, belonging to a same RO set.

In another implementation, according to a RO distribution configured by the network-side device, it is determined that a plurality of ROs at a same frequency position belong to a same RO set, and a possible combination for a RO set has the same effect as a RO set shown in FIG. 5. In this way, a RO set determined according to the implicit rule does not contain RO combinations at different frequency positions at a same time.

Alternatively, the frequency positions of the plurality of ROs are determined based on the time indexes. The time indexes may be considered as sequential indexes of resources used for PRACH transmission in a time period. Referring to FIG. 3, ROs at different times have different time indexes.

In another implementation, the frequency positions of the plurality of ROs are all different, that is, PRACH preamble repetition transmission can be performed at different frequency positions, and performance of PRACH repetition transmission can be improved in such a frequency hopping transmission manner.

Optionally, the frequency positions of the plurality of ROs are all different, that is, PRACH preamble repetition transmission can be performed at different frequency positions at different times.

Optionally, the frequency positions of the plurality of ROs being all different includes:
frequency positions of adjacent ROs in the plurality of ROs are spaced apart by X frequency units; where
X is an integer, X is a predefined value or is determined according to the configuration from the network-side device, and the frequency unit includes resource block RB, subcarrier, subband, or RO bandwidth.

That is, according to the RO distribution configured by the network-side device, it can be determined that the plurality of ROs with the frequency positions of adj acent ROs being spaced apart by X frequency units belong to a same RO set. A possible combination for RO sets is shown in FIG. 6. In a case that the network-side device configures frequency hopping transmission, the preset rule is that ROs at different frequency positions at adjacent moments form one RO set in chronological order, so it is determined to use ROs associated with {SSB#0,SSB#3,SSB#4,SSB#7} to form one RO set and use ROs associated with {SSB#1, SSB#2, SSB#5, SSB#6} to form one RO set.

The terminal cannot perform PRACH transmission on the FDM RO resources at the same time, so the time positions of the plurality of ROs are all different. That is, two ROs at the same position are not included in the plurality of ROs.

Because a plurality of SSBs are associated with one RO in the existing SSB-RO association configuration, the plurality of rules above can be combined, and the configuration from the network-side device may be combined with the preset rule. For example, as configured/indicated by the network-side device, it is determined that the ROs at the same frequency position are one RO set, and each RO is associated with a plurality of SSBs, and SSBs associated with ROs can be further limited in a manner of network indication or preset rules. Alternatively, according to a preset rule, it is determined that the ROs at the same frequency position are one RO set, and each RO is associated with a plurality of SSBs, and SSBs associated with ROs can be further limited in a manner of network indication or preset rules.

For example, in a manner shown in FIG. 3, the network may further indicate that RO-associatied SSB combinations are limited to {SSB#0,SSB#2,SSB#4,SSB#6}, {SSB#1,SSB#3,SSB#5,SSB#7}. Alternatively, according to the rule that the values of mod(SSB index, m) are equal, for example, M=2 is further configured to limit RO-associatied SSB combinations to {SSB#0,SSB#2,SSB#4,SSB#6}, {SSB#1,SSB#3,SSB#5,SSB#7}.

In this embodiment of this application, the parameters of the RO set are determined in a manner of preset rule, which can prevent the terminal from randomly selecting a RO combination for PRACH repetition transmission or from selecting too many ROs for PRACH repetition transmission, thus reducing a probability of PRACH collision, improving a capacity of PRACH, reducing configuration parameters of the network, and decreasing configuration overheads.

The parameters of the RO set meet at least one of the following:
the index value of the SSB associated with the plurality of ROs meets a value of mod(SSB index, M) being equal, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

It can be understood that the parameters of the RO set configured by the network or the parameters of the RO set determined according to the preset rule meet at least one of the above.

Optionally, for the random access procedure indicated by the network, for example, the RACH procedure for contention-based random access (Contention Based Random Access, CBRA) or contention-free random access (Contention Free Random Access, CFRA) indicated by a PDCCH order or RRC signaling, the network may indicate a RO set during RO set indication for PRACH repetition, or indicate a RO resource for PRACH repetition transmission by indicating a reference RO in the RO set.

Optionally, the plurality of ROs are K RO resources in at least one association period; where
the association period is a time required to fulfill at least one SSB-to-RO mapping within one set of preset time periods; where K is an integer greater than 1.

Under the existing framework, a time required to fulfill one mapping for all SSBs and PRACH resources sent by the network-side device is referred to as a RO mapping period. One mapping requires one or more frames (10ms), or a plurality of SSB-RO mappings may be fulfilled in one frame (10ms). One RO association period (association period) contains at least one frame, and at least one SSB-to-RO mapping needs to be fulfilled in the RO association period.

One association period (association period) may contain a plurality of RO mapping periods.

The number K of ROs included in one association period is implicitly determined.

For example, a set of preset time periods is {10,20,40,80,160}ms.

For example, there is one RO every 10ms, there are four SSBs, and each SSB is associated with one RO. In this case, it takes 40ms to fulfill one SSB-to-RO mapping.40 ms is an association period (association period).

For another example, there are 8 ROs in 10ms, there are 4 SSBs in total, and each SSB is associated with one RO. In this case, 10ms is the shortest time to fulfill at least one mapping in the set of preset time periods, and two mappings can be fulfilled. 10ms is an association period (association period).

Optionally, there is only one RO in each association period, or there is only one RO in each RO mapping period.

PRACH repetition transmission may be based on a RO mapping period or RO association period as a basic unit, and transmission is performed on only one RO in each period.

Optionally, an SSB associated with the RO in each association period is the same, or an SSB associated with the RO in each RO mapping period is the same.

That is, in each association period or mapping period, ROs used for PRACH repetition transmission may be associated with a same SSB.

Optionally, preambles transmitted on the plurality of ROs meet at least one of the following conditions:
index values of the preambles are the same; and
the index values of the preambles meet the values of mod(preamble index, N) being equal, where N is an integer.

During PRACH repetition transmission, the terminal needs to determine not only a plurality of ROs for PRACH repetition transmission, but also a preamble used for PRACH transmission on each RO.

A PRACH preamble combination used for PRACH repetition transmission can be further defined, for example, a plurality of repeated preambles are defined as a same preamble (with a same index value), or the index values of these preambles meet a second preset rule, where the second preset rule is that the index values of the preambles meet the values of mod(preamble index, N) being equal.

Using FIG. 5 as an example, each RO is associated with two SSBs, and the preamble indexes for SSBs with even indexes are 0-31, and the preamble indexes for SSBs with odd indexes is 32-63. A combination of index values of SSBs associated with ROs for PRACH repetition is {SSB#0,SSB#2,SSB#4,SSB#6}, and a set of index values of preambles selected for use on each RO are 0-31. It is further limited to perform transmission by using PRACH preambles with a same index value among preambles 0-31.

Similarly, if a combination of index values of SSBs associated with ROs for PRACH repetition is { SSB#1,SSB#3,SSB#5,SSB#7}, and a set of index values of preambles selected for use on each RO are 32-63. It is further limited to perform transmission by using PRACH preambles with a same index value among preambles 32-63.

If the SSB indexes used for PRACH repetition transmission have different associated preamble index values, PRACH preamble index values on different ROs can be further limited to meet the second preset rule that the values of mod(preamble index,N) need to be equal.

Optionally, N meets at least one of the following:
N is determined according to a configuration from a network-side device; and
N is a ratio of 64 and num_SSB_RO, where num_SSB_RO is the number of SSBs associated with one RO.

For example, still using FIG. 3 as an example, the network indicates that index values of SSBs associated with a RO used for PRACH repetition transmission are {SSB#0,SSB#3,SSB#4,SSB#7}; a set of preamble index values used by ROs associated with SSB#0 and SSB#4 are all 0-31, and a set of preamble index values used by ROs associated with SSB#3 and SSB#7 are all 32-63. It can be further required that the values of mod(preamble index,N) are equal.

N=32 may be configured by the network-side device.

Alternatively, N is a ratio of 64 and num_SSB_RO, and num_SSB_RO is the number of SSBs associated with one RO. In the example of FIG. 3, num_SSB_RO=2. Then, if a preamble index selected on the RO associated with SSB#0 and SSB#4 is 0, a preamble index selected on the RO associated with SSB#3 and SSB#7 is 32; or if the preamble index selected on the RO associated with SSB#0 and SSB#4 is 1, the preamble index selected on the RO associated with SSB#3 and SSB#7 is 33, always meeting values of mod(preamble index, 32) being equal.

Optionally, a set of index values of preambles usable for PRACH repetition transmission is determined according to a configuration from a network-side device.

That is, the network-side device configures a set of index values of preambles for PRACH repetition transmission.

Optionally, the set of index values of preambles is associated with all SSBs sent by the network-side device. That is, the preambles corresponding to the set of index values are no longer divided for the associated SSBs.

In the related art, in a case that one SSB corresponds to a plurality of ROs, corresponding preamble sets are different. Further, the preamble sets for repetition transmission corresponding to each SSB are also different in a case that PRACH repetition transmission is supported.

A disadvantage of this method lies in that a plurality of preamble sets need to be obtained through division to correspond to a plurality of SSBs, which leads to very large overheads for division of preamble resources, occupying preamble resources not used for repetition transmission. The aforementioned scheme with index values of preambles sent on a plurality of ROs being different has such problem.

The set of index values of preambles is associated with all SSBs sent by the network-side device, and different SSBs are no longer required to associate with different preamble sets, thus reducing the number of PRACH preamble resources occupied. In addition, the network may simply monitor one preamble set to determine whether there is UE performing PRACH repetition transmission, which reduces complexity of network implementation.

For example, the network monitors a same preamble set on each RO, and if a preamble in this set is detected, it is considered that there is a terminal performing repetition transmission.

Optionally, the method further includes one of the following:
determining a random access radio network temporary identifier RA-RNTI based on the RO set; and
monitoring, based on the RA-RNTI, a random access response RAR message sent by the network-side device.

The determining a RA-RNTI based on the RO set includes one of the following:
determining the RA-RNTI based on one reference RO in the RO set; and
determining the RA-RNTI based on parameters of the RO set.

After PRACH transmission, the terminal needs to monitor RAR(Msg2). Because a RA-RNTI corresponding to PRACH transmission on each RO under the existing mechanism may be different, the method for determining a RA-RNTI after PRACH repetition transmission on a plurality of ROs needs to be further clarified.

A possible method is to calculate a RA-RNTI by using a parameter of one reference RO in the plurality of ROs, including time index, frequency index, symbol index, or the like.

Optionally, the reference RO includes one of the following:
the first RO of the plurality of ROs;
the last RO of the plurality of ROs; and
one RO indicated by the network-side device.

That is, the reference RO can be the first RO or the last RO in the plurality of ROs, or one RO indicated by the network-side device. In this way, an existing rule may be used for a RA-RNTI calculation method. When the terminal monitors a PDCCH scrambled by RA-RNTI, PDCCH monitoring for scheduling RAR is performed based on a RA-RNTI calculated based on the reference RO.

Because the network can transmit PRACH responses for a plurality of terminals via a same RAR, a reference RO is selected to calculate a RA-RNTI according to the existing rule. This helps the network to transmit RARs on a same PDSCH (scrambled by RA-RNTI) for UE with PRACH repetition transmission and UE without PRACH repetition transmission but using a reference RO for PRACH transmission, thus reducing network overheads.

In the transmitted RAR, the network can choose to use an index of a preamble sent by the UE and detected on the reference RO to determine a RAPID and send it in the RAR.

Alternatively, a new RA-RNTI calculation method is defined to calculate a RA-RNTI by using a parameter of a RO set.

Optionally, the parameters of the RO set include at least one of the following:
an index value of a time unit in which the RO set is located, where the time unit includes at least one of the following: frame, subframe, slot, and symbol;
an index value of an SSB associated with the RO set, for example, being associated with an index of the first or last SSB; and
a frequency index value of the RO set, for example, a frequency index value of a starting RO.

For example, the new calculation formula is: RA-RNTI = 1 + sf_id + 4 x SSB_id + 64 x f_id;
where, sf_id may be a frame (frame)/subframe (subframe)/slot (slot)/symbol idx (symbol idx), SSB_id may be an SSB index value, f_id may be a frequency index value of RO set, and the frequency index values of RO set may be sorted in ascending order based on frequency positions.

Coverage of terminals for PRACH repetition transmission is usually poor, and PDCCHs scrambled by different RA-RNTIs are used for RAR scheduling. In this way, the network can optimize RAR transmission parameters for these terminals with poor coverage to ensure transmission performance of random responses for PRACH repetition transmission

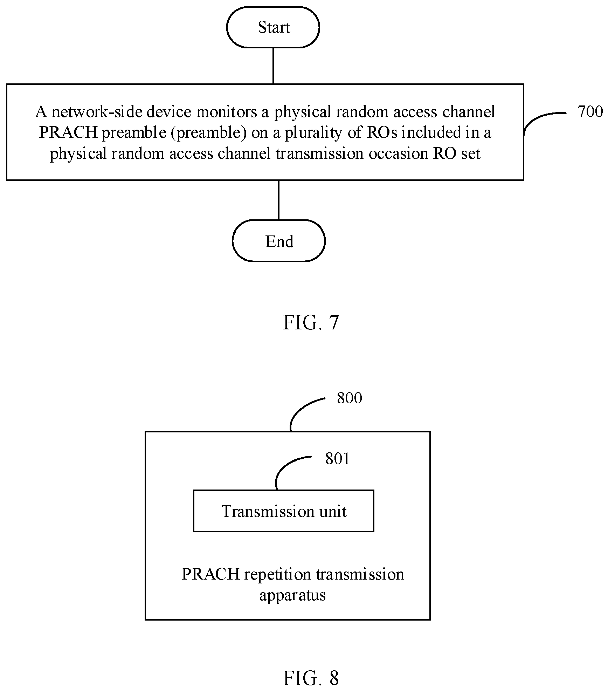

FIG. 7 is a second schematic flowchart of a PRACH repetition transmission method according to an embodiment of this application. As shown in FIG. 7, the PRACH repetition transmission method includes the following step.

Step 700: A network-side device monitors a physical random access channel PRACH preamble (preamble) on a plurality of ROs included in a physical random access channel transmission occasion RO set.

In this embodiment of this application, the network-side device monitors physical random access channel PRACH preambles on a plurality of ROs included in the physical random access channel transmission occasion RO set, thereby improving reception performance of PRACH for the network.

Optionally, the method further includes:
obtaining parameters of the RO set, and determining the RO set based on the parameters of the RO set.

Optionally, the parameters of the RO set include at least one of the following:
an index value of a synchronization signal block SSB associated with the plurality of ROs;
a time resource in which a RO usable for PRACH repetition transmission is located; and
a frequency resource in which a RO usable for PRACH repetition transmission is located.

Optionally, the method further includes:
sending a first message to a terminal, where the first message is used for indicating the parameters of the RO set; or
determining the parameters of the RO set according to a preset rule.

Optionally, the preset rule includes at least one of the following:
an index value of an SSB with value of mod(SSB index, M) being equal is used as the index value of the SSB associated with the plurality of ROs;
frequency positions of the plurality of ROs are the same, or the frequency positions of the plurality of ROs are determined based on time indexes;
frequency positions of the plurality of ROs are all different; and
time positions of the plurality of ROs are all different.

The parameters of the RO set meet at least one of the following:
the index value of the SSB associated with the plurality of ROs meets a value of mod(SSB index, M) being equal, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

Optionally, the frequency positions of the plurality of ROs being all different includes:
frequency positions of adjacent ROs in the plurality of ROs are spaced apart by X frequency units; where X is an integer, X is a predefined value or is determined according to the configuration from the network-side device, and the frequency unit includes resource block RB, subcarrier, subband, or RO bandwidth.

Optionally, the plurality of ROs are K RO resources in at least one association period; where
the association period is a time required to fulfill at least one SSB-to-RO mapping within one set of preset time periods; where K is an integer greater than 1.

Optionally, there is only one RO in each association period, or there is only one RO in each RO mapping period; where
the RO mapping period is a time required to fulfill one RO-to-SSB mapping within one set of preset time periods.

Optionally, an SSB associated with the RO in each association period is the same, or an SSB associated with the RO in each RO mapping period is the same; where
the RO mapping period is a time required to fulfill one RO-to-SSB mapping within one set of preset time periods.

Optionally, preambles monitored on the plurality of ROs meet at least one of the following conditions:
index values of the preambles are the same; and
the index values of the preambles meet the values of mod(preamble index, N) being equal, where N is an integer.

Optionally, N meets at least one of the following:
N is determined according to a configuration from a network-side device; and
N is a ratio of 64 and num_SSB_RO, where num_SSB_RO is the number of SSBs associated with one RO.

Optionally, a set of index values of preambles usable for PRACH repetition transmission is determined according to a configuration from a network-side device.

Optionally, the set of index values of preambles is associated with all SSBs sent by the network-side device.

Optionally, the method further includes:
determining a random access radio network temporary identifier RA-RNTI based on the RO set; and
sending a random access response RAR message based on the RA-RNTI.

The determining a RA-RNTI based on the RO set includes one of the following:
determining the RA-RNTI based on one reference RO in the RO set; and
determining the RA-RNTI based on parameters of the RO set.

Optionally, the parameters of the RO set include at least one of the following:
an index value of a time unit in which the RO set is located, where the time unit includes at least one of the following: frame, subframe, slot, and symbol;
an index value of an SSB associated with the RO set; and
a frequency index value of the RO set.

For the embodiments using the network-side device as an execution body, reference may be made to the related descriptions of the foregoing embodiments using the terminal as an execution body. Details are not described herein again.

It should be noted that, for the PRACH repetition transmission method provided by the embodiments of this application, the execution body may be a PRACH repetition transmission apparatus, or a control module for executing the PRACH repetition transmission method in the PRACH repetition transmission apparatus. In the embodiments of this application, the PRACH repetition transmission method being performed by the PRACH repetition transmission apparatus is used as an example to describe the PRACH repetition transmission apparatus provided in the embodiments of this application.

FIG. 8 is a first schematic structural diagram of a PRACH repetition transmission apparatus according to an embodiment of this application. As shown in FIG. 8, the PRACH repetition transmission apparatus 800 includes:
a transmission unit 810, configured to perform physical random access channel PRACH preamble (preamble) repetition transmission on a plurality of ROs included in a physical random access channel transmission occasion RO set.

In this embodiment of this application, occasions for PRACH preamble repetition transmissions of the terminal are limited to a RO set, which can reduce a probability of PRACH collision, improve a capacity of PRACH, and optimize a random access procedure.

Optionally, the apparatus further includes:
a first determining unit, configured to obtain parameters of the RO set, and determine the RO set based on the parameters of the RO set.

Optionally, the parameters of the RO set include at least one of the following:
an index value of a synchronization signal block SSB associated with the plurality of ROs;
a time resource in which a RO usable for PRACH repetition transmission is located; and
a frequency resource in which a RO usable for PRACH repetition transmission is located.

Optionally, the parameters of the RO set are determined according to a configuration from a network-side device and/or according to a preset rule.

The parameters of the RO set meet at least one of the following:
the index value of the SSB associated with the plurality of ROs meets a value of mod(SSB index, M) being equal, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

Optionally, the frequency positions of the plurality of ROs being all different includes:
frequency positions of adjacent ROs in the plurality of ROs are spaced apart by X frequency units; where
X is an integer, X is a predefined value or is determined according to the configuration from the network-side device, and the frequency unit includes resource block RB, subcarrier, subband, or RO bandwidth.

Optionally, the plurality of ROs are K RO resources in at least one association period; where
the association period is a time required to fulfill at least one SSB-to-RO mapping within one set of preset time periods; where K is an integer greater than 1.

Optionally, there is only one RO in each association period, or there is only one RO in each RO mapping period; where
the RO mapping period is a time required to fulfill one RO-to-SSB mapping within one set of preset time periods.

Optionally, an SSB associated with the RO in each association period is the same, or an SSB associated with the RO in each RO mapping period is the same; where
the RO mapping period is a time required to fulfill one RO-to-SSB mapping within one set of preset time periods.

Optionally, preambles transmitted on the plurality of ROs meet at least one of the following conditions:
index values of the preambles are the same; and
the index values of the preambles meet the values of mod(preamble index, N) being equal, where N is an integer.

Optionally, N meets at least one of the following:
N is determined according to a configuration from a network-side device; and
N is a ratio of 64 and num_SSB_RO, where num_SSB_RO is the number of SSBs associated with one RO.

Optionally, a set of index values of preambles usable for PRACH repetition transmission is determined according to a configuration from a network-side device.

Optionally, the set of index values of preambles is associated with all SSBs sent by the network-side device.

Optionally, the apparatus further includes a first monitoring unit configured to:
determine a random access radio network temporary identifier RA-RNTI based on the RO set; and
monitor, based on the RA-RNTI, a random access response RAR message sent by the network-side device; where
the determining a RA-RNTI based on the RO set includes one of the following:
   determining the RA-RNTI based on one reference RO in the RO set; and
   determining the RA-RNTI based on parameters of the RO set.

Optionally, the reference RO includes one of the following:
the first RO of the plurality of ROs;
the last RO of the plurality of ROs; and
one RO indicated by the network-side device.

Optionally, the parameters of the RO set include at least one of the following:
an index value of a time unit in which the RO set is located, where the time unit includes at least one of the following: frame, subframe, slot, and symbol;
an index value of an SSB associated with the RO set; and
a frequency index value of the RO set.

The PRACH repetition transmission apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The PRACH repetition transmission apparatus provided in this embodiment of this application can implement the processes implemented in the method embodiment in FIG. 2 to FIG. 6, with the same technical effects achieved. To avoid repetition, details are not described herein again.

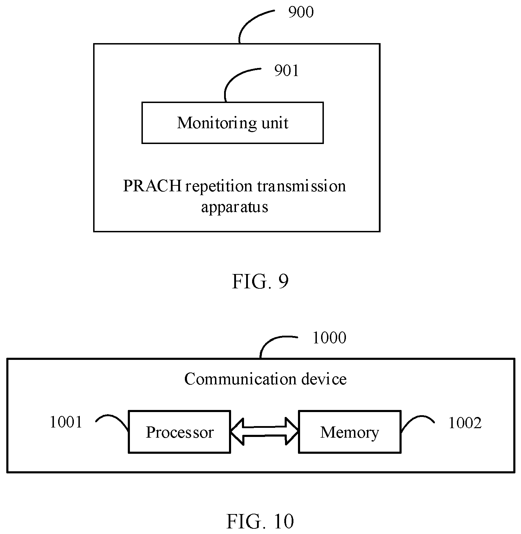

FIG. 9 is a second schematic structural diagram of a PRACH repetition transmission apparatus according to an embodiment of this application. As shown in FIG. 9, the PRACH repetition transmission apparatus 900 includes:
a monitoring unit 910, configured to monitor a physical random access channel PRACH preamble (preamble) on a plurality of ROs included in a physical random access channel transmission occasion RO set.

In this embodiment of this application, monitoring on physical random access channel PRACH preambles is performed on a plurality of ROs included in the physical random access channel transmission occasion RO set, thereby reducing a probability of PRACH collision and improving receiving performance of PRACH.

The apparatus further includes:
a second determining unit, configured to obtain parameters of the RO set, and determine the RO set based on the parameters of the RO set.

Optionally, the parameters of the RO set include at least one of the following:
an index value of a synchronization signal block SSB associated with the plurality of ROs;
a time resource in which a RO usable for PRACH repetition transmission is located; and
a frequency resource in which a RO usable for PRACH repetition transmission is located.

Optionally, the apparatus further includes:
a first sending unit, configured to send a first message to a terminal, where the first message is used for indicating the parameters of the RO set; or
a third determining unit, configured to determine the parameters of the RO set according to a preset rule.

The parameters of the RO set meet at least one of the following:
the index value of the SSB associated with the plurality of ROs meets a value of mod(SSB index, M) being equal, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

Optionally, the frequency positions of the plurality of ROs being all different includes:
frequency positions of adjacent ROs in the plurality of ROs are spaced apart by X frequency units; where X is an integer, X is a predefined value or is determined according to the configuration from the network-side device, and the frequency unit includes resource block RB, subcarrier, subband, or RO bandwidth.

Optionally, the plurality of ROs are K RO resources in at least one association period; where
the association period is a time required to fulfill at least one SSB-to-RO mapping within one set of preset time periods; where K is an integer greater than 1.

Optionally, there is only one RO in each association period, or there is only one RO in each RO mapping period; where
the RO mapping period is a time required to fulfill one RO-to-SSB mapping within one set of preset time periods.

Optionally, an SSB associated with the RO in each association period is the same, or an SSB associated with the RO in each RO mapping period is the same; where
the RO mapping period is a time required to fulfill one RO-to-SSB mapping within one set of preset time periods.

Optionally, preambles monitored on the plurality of ROs meet at least one of the following conditions:
index values of the preambles are the same; and
the index values of the preambles meet the values of mod(preamble index, N) being equal, where N is an integer.

Optionally, N meets at least one of the following:
N is determined according to a configuration from a network-side device; and
N is a ratio of 64 and num_SSB_RO, where num_SSB_RO is the number of SSBs associated with one RO.

Optionally, a set of index values of preambles usable for PRACH repetition transmission is determined according to a configuration from a network-side device.

Optionally, the set of index values of preambles is associated with all SSBs sent by the network-side device.

Optionally, the apparatus further includes:
a fourth determining unit, configured to determine a random access radio network temporary identifier RA-RNTI based on the RO set; and
a second sending unit, configured to send a random access response RAR message based on the RA-RNTI.

The determining a RA-RNTI based on the RO set includes one of the following:
determining the RA-RNTI based on one reference RO in the RO set; and
determining the RA-RNTI based on parameters of the RO set.

Optionally, the reference RO includes one of the following:
the first RO of the plurality of ROs;
the last RO of the plurality of ROs; and
one RO indicated by the network-side device.

Optionally, the parameters of the RO set include at least one of the following:
an index value of a time unit in which the RO set is located, where the time unit includes at least one of the following: frame, subframe, slot, and symbol;
an index value of an SSB associated with the RO set; and
a frequency index value of the RO set.

The PRACH repetition transmission apparatus provided in this embodiment of this application can implement the processes implemented in the method embodiment in FIG. 7, with the same technical effects achieved. To avoid repetition, details are not described herein again.

Optionally, as shown in FIG. 10, an embodiment of this application further provides a communication device 1000, including a processor 1001, a memory 1002, and a program or instructions stored in the memory 1002 and executable on the processor 1001. For example, when the communication device 1000 is a terminal and when the program or instructions are executed by the processor 1001, the processes of the foregoing embodiment of the PRACH repetition transmission method are implemented, with the same technical effects achieved. When the communication device 1000 is a network-side device and when the program or the instructions are executed by the processor 1001, the processes of the foregoing embodiment of the PRACH repetition transmission method are implemented, with the same technical effects achieved. To avoid repetition, details are not described herein again.

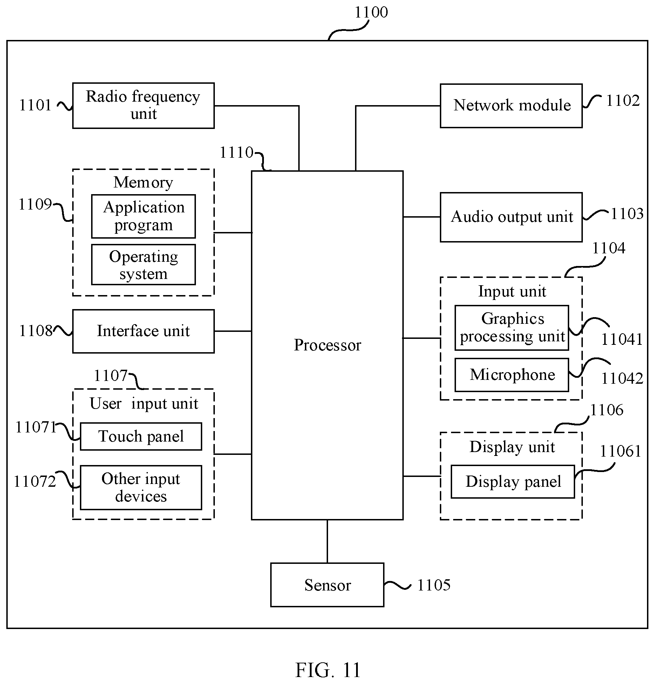

An embodiment of this application further provides a terminal, including a processor and a communication interface, where the communication interface is configured to perform physical random access channel PRACH preamble (preamble) repetition transmission on a plurality of ROs included in a physical random access channel transmission occasion RO set. The terminal embodiments correspond to the foregoing terminal-side method embodiments, and the implementation processes and implementations of the foregoing method embodiments can be applied to the terminal embodiments, with the same technical effects achieved. Specifically, FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing; and also sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may include a program or instruction storage area and a data storage area. The program or instruction storage area may store an operating system, an application program or instruction required by at least one function (for example, a sound playback function or an image playback function), and the like. In addition, the memory 1109 may include a highspeed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1110 may include one or more processing units. Optionally, an application processor and a modem processor may be integrated in the processor 1110. The application processor primarily processes an operating system, user interfaces, application programs or instructions, and the like. The modem processor primarily processes radio communication, for example, being a baseband processor. It can be understood that the modem processor may alternatively be not integrated in the processor 1110.

The radio frequency unit 1101 is configured to: perform physical random access channel PRACH preamble (preamble) repetition transmission on a plurality of ROs included in a physical random access channel transmission occasion RO set.

In this embodiment of this application, occasions for PRACH preamble repetition transmissions of the terminal are limited to a RO set, which can reduce a probability of PRACH collision, improve a capacity of PRACH, and optimize a random access procedure.

Optionally, the processor 1110 is configured to:
obtain parameters of the RO set, and determine the RO set based on the parameters of the RO set.

Optionally, the parameters of the RO set include at least one of the following:
an index value of a synchronization signal block SSB associated with the plurality of ROs;
a time resource in which a RO usable for PRACH repetition transmission is located; and
a frequency resource in which a RO usable for PRACH repetition transmission is located.

Optionally, the parameters of the RO set are determined according to a configuration from a network-side device and/or according to a preset rule.

Optionally, the parameters of the RO set meet at least one of the following:
the index value of the SSB associated with the plurality of ROs meets a value of mod(SSB index, M) being equal, where M is an integer and M is a predefined value or is determined according to the configuration from the network-side device;
frequency positions of the plurality of ROs are the same, or the frequency positions of the plurality of ROs are determined based on time indexes;
frequency positions of the plurality of ROs are all different; and
time positions of the plurality of ROs are all different.

Optionally, the frequency positions of the plurality of ROs being all different includes:
frequency positions of adjacent ROs in the plurality of ROs are spaced apart by X frequency units; where
X is an integer, X is a predefined value or is determined according to the configuration from the network-side device, and the frequency unit includes resource block RB, subcarrier, subband, or RO bandwidth.

Optionally, the plurality of ROs are K RO resources in at least one association period; where
the association period is a time required to fulfill at least one SSB-to-RO mapping within one set of preset time periods; where K is an integer greater than 1.

Optionally, there is only one RO in each association period, or there is only one RO in each RO mapping period; where
the RO mapping period is a time required to fulfill one RO-to-SSB mapping within one set of preset time periods.

Optionally, an SSB associated with the RO in each association period is the same, or an SSB associated with the RO in each RO mapping period is the same; where
the RO mapping period is a time required to fulfill one RO-to-SSB mapping within one set of preset time periods.

Optionally, preambles transmitted on the plurality of ROs meet at least one of the following conditions:
index values of the preambles are the same; and
the index values of the preambles meet the values of mod(preamble index, N) being equal, where N is an integer.

Optionally, N meets at least one of the following:
N is determined according to a configuration from a network-side device; and
N is a ratio of 64 and num_SSB_RO, where num_SSB_RO is the number of SSBs associated with one RO.

Optionally, a set of index values of preambles usable for PRACH repetition transmission is determined according to a configuration from a network-side device.

Optionally, the set of index values of preambles is associated with all SSBs sent by the network-side device.

Optionally, the processor 1110 is further configured to:
determine a random access radio network temporary identifier RA-RNTI based on the RO set; and
monitor, based on the RA-RNTI, a random access response RAR message sent by the network-side device; where
the determining a RA-RNTI based on the RO set includes one of the following:
   determining the RA-RNTI based on one reference RO in the RO set; and
   determining the RA-RNTI based on parameters of the RO set.

Optionally, the reference RO includes one of the following:
the first RO of the plurality of ROs;
the last RO of the plurality of ROs; and
one RO indicated by the network-side device.

Optionally, the parameters of the RO set include at least one of the following:
an index value of a time unit in which the RO set is located, where the time unit includes at least one of the following: frame, subframe, slot, and symbol;
an index value of an SSB associated with the RO set; and
a frequency index value of the RO set.

An embodiment of this application further provides a network-side device, including a processor and a communication interface, where the communication interface is configured to monitor a physical random access channel PRACH preamble (preamble) on a plurality of ROs included in a physical random access channel transmission occasion RO set. The network-side device embodiments correspond to the foregoing network-side device method embodiments, and the implementation processes and implementations of the foregoing method embodiments can be applied to the network-side device embodiments, with the same technical effects achieved.

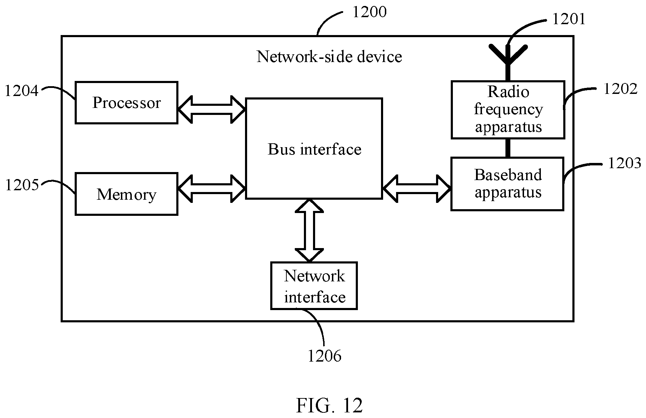

Specifically, an embodiment of this application further provides a network-side device. As shown in FIG. 12, the network-side device 1200 includes an antenna 1201, a radio frequency apparatus 1202, and a baseband apparatus 1203. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The frequency band processing apparatus may be located in the baseband apparatus 1203. The method performed by the network-side device in the foregoing embodiments may be implemented in the baseband apparatus 1203, and the baseband apparatus 1203 includes a processor 1204 and a memory 1205.

The baseband apparatus 1203 may include, for example, at least one baseband board, where a plurality of chips are disposed on the baseband board. As shown in FIG. 12, one of the chips is, for example, the processor 1204, connected to the memory 1205, to invoke a program in the memory 1205 to perform the operation of the network-side device shown in the foregoing method embodiment.

The baseband apparatus 1203 may further include a network interface 1206, configured to exchange information with the radio frequency apparatus 1202, where the interface is, for example, a common public radio interface (common public radio interface, CPRI for short).

Specifically, the network-side device in this embodiment of the present invention further includes: instructions or a program stored in the memory 1205 and executable on the processor 1204. The processor 1204 invokes the instructions or program in the memory 1205 to execute the method executed by the modules shown in FIG. 9, with the same technical effects achieved. To avoid repetition, details are not repeated herein.

An embodiment of this application further provides a readable storage medium, where a program or instructions are stored in the readable storage medium. When the program or the instructions are executed by a processor, the processes of the foregoing embodiment of the PRACH repetition transmission method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing PRACH repetition transmission method embodiments, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory storage medium, and when being executed by at least one processor, the computer program/program product is configured to implement the processes of the foregoing PRACH repetition transmission method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

## Claims

1. A PRACH repetition transmission method, performed by a terminal (11) comprising:
performing (400) physical random access channel, PRACH, preamble repetition transmission on a plurality of random access channel occasions, ROs, comprised in a RO set; wherein
the method further comprises:
obtaining parameters of the RO set, and determining the RO set based on the parameters of the RO set; wherein
the parameters of the RO set comprise: a frequency resource in which a RO usable for PRACH repetition transmission is located; wherein
the parameters of the RO set meet at least one of the following:
an index value of a synchronization signal block, SSB, associated with the plurality of ROs meets a value of mod(SSB index, M) being equal, wherein M is an integer and M is a predefined value; and
frequency positions of the plurality of ROs are the same.

2. The PRACH repetition transmission method according to claim 1, wherein the parameters of the RO set are determined according to a configuration from a network-side device (12) and/or according to a preset rule.

3. The PRACH repetition transmission method according to claim 1, wherein the plurality of ROs are K RO resources in at least one association period; and
an association period is a time required to fulfill at least one SSB-to-RO mapping within one set of preset time periods; wherein K is an integer greater than 1.

4. The PRACH repetition transmission method according to claim 3, wherein an SSB associated with an RO in each association period is the same, or an SSB associated with an RO in each RO mapping period is the same; and
an RO mapping period is a time required to fulfill one RO-to-SSB mapping within one set of preset time periods.

5. The PRACH repetition transmission method according to claim 1, wherein the method further comprises:
determining a random access radio network temporary identifier, RA-RNTI, based on the RO set; and
monitoring, based on the RA-RNTI, a random access response, RAR, message sent by a network-side device (12); wherein
the determining a RA-RNTI based on the RO set comprises one of the following:
determining the RA-RNTI based on one reference RO in the RO set; and
determining the RA-RNTI based on parameters of the RO set.

6. The PRACH repetition transmission method according to claim 5, wherein the reference RO comprises one of the following:
the first RO of the plurality of ROs;
the last RO of the plurality of ROs; and
one RO indicated by the network-side device (12).

7. A PRACH repetition transmission method, performed by a network-side device (12) comprising:
monitoring (700) a physical random access channel, PRACH, preamble on a plurality of random access channel occasions, ROs, comprised in a RO set; wherein
the method further comprises:
obtaining parameters of the RO set, and determining the RO set based on the parameters of the RO set; wherein
the parameters of the RO set comprise: a frequency resource in which a RO usable for PRACH repetition transmission is located; wherein
the parameters of the RO set meet at least one of the following:
an index value of a synchronization signal block, SSB, associated with the plurality of ROs meets a value of mod(SSB index, M) being equal, wherein M is an integer and M is a predefined value; and
frequency positions of the plurality of ROs are the same.

8. The PRACH repetition transmission method according to claim 7, wherein the method further comprises:
sending a first message to a terminal (11), wherein the first message is used for indicating the parameters of the RO set; or
determining the parameters of the RO set according to a preset rule.

9. The PRACH repetition transmission method according to claim 7, wherein the plurality of ROs are K RO resources in at least one association period; and
an association period is a time required to fulfill at least one SSB-to-RO mapping within one set of preset time periods; wherein K is an integer greater than 1.

10. The PRACH repetition transmission method according to claim 7, wherein the method further comprises:
determining a random access radio network temporary identifier, RA-RNTI, based on the RO set; and
sending a random access response, RAR, message based on the RA-RNTI; wherein
the determining a RA-RNTI based on the RO set comprises one of the following:
determining the RA-RNTI based on one reference RO in the RO set; and
determining the RA-RNTI based on parameters of the RO set.

11. The PRACH repetition transmission method according to claim 10, wherein the reference RO comprises one of the following:
the first RO of the plurality of ROs;
the last RO of the plurality of ROs; and
one RO indicated by the network-side device (12).

12. A PRACH repetition transmission apparatus (800), comprising:
a transmission unit (810), configured to perform physical random access channel, PRACH, preamble repetition transmission on a plurality of random access channel occasions, ROs, comprised in a RO set; wherein
the apparatus (800) further comprises:
a first determining unit, configured to obtain parameters of the RO set, and determine the RO set based on the parameters of the RO set; wherein
the parameters of the RO set comprise: a frequency resource in which a RO usable for PRACH repetition transmission is located; wherein
the parameters of the RO set meet at least one of the following:
an index value of a synchronization signal block, SSB, associated with the plurality of ROs meets a value of mod(SSB index, M) being equal, wherein M is an integer and M is a predefined value; and
frequency positions of the plurality of ROs are the same.

13. The PRACH repetition transmission apparatus (800) according to claim 12, wherein the parameters of the RO set are determined according to a configuration from a network-side device and/or according to a preset rule.

14. A PRACH repetition transmission apparatus (900), comprising:
a monitoring unit (910), configured to monitor a physical random access channel, PRACH, preamble on a plurality of random access channel occasions, ROs, comprised in a RO set; wherein
the apparatus (900) further comprises:
a second determining unit, configured to obtain parameters of the RO set, and determine the RO set based on the parameters of the RO set; wherein
the parameters of the RO set comprise: a frequency resource in which a RO usable for PRACH repetition transmission is located; wherein
the parameters of the RO set meet at least one of the following:
an index value of a synchronization signal block, SSB, associated with the plurality of ROs meets a value of mod(SSB index, M) being equal, wherein M is an integer and M is a predefined value; and
frequency positions of the plurality of ROs are the same.

15. The PRACH repetition transmission apparatus (900) according to claim 14, wherein the apparatus (900) further comprises:
a first sending unit, configured to send a first message to a terminal, wherein the first message is used for indicating the parameters of the RO set; or
a third determining unit, configured to determine the parameters of the RO set according to a preset rule.

## Patentansprüche

1. Ein PRACH-Wiederholungsübertragungsverfahren, das von einem Endgerät (11) durchgeführt wird und Folgendes beinhaltet:
Durchführen (400) einer Präambelwiederholungsübertragung eines physikalischen Direktzugriffskanals, PRACH (Physical Random Access Channel), auf einer Vielzahl von Direktzugriffskanalgelegenheiten, ROs (Random Access Channel Occasions), die in einem RO-Satz beinhaltet sind; wobei
das Verfahren ferner Folgendes beinhaltet:
Erhalten von Parametern des RO-Satzes und Bestimmen des RO-Satzes auf der Basis der Parameter des RO-Satzes; wobei
die Parameter des RO-Satzes Folgendes beinhalten: eine Frequenzressource, in der sich eine für die PRACH-Wiederholungsübertragung verwendbare RO befindet; wobei die Parameter des RO-Satzes mindestens eines der Folgenden erfüllen:
ein Indexwert eines Synchronisationssignalblocks, SSB, der mit der Vielzahl von ROs assoziiert ist, erfüllt, dass ein Wert von mod(SSB-Index, M) gleich groß ist, wobei M eine ganze Zahl ist und M ein vordefinierter Wert ist; und
Frequenzpositionen der Vielzahl von ROs sind gleich.

2. PRACH-Wiederholungsübertragungsverfahren gemäß Anspruch 1, wobei die Parameter des RO-Satzes gemäß einer Konfiguration von einer netzwerkseitigen Vorrichtung (12) und/oder gemäß einer vorgegebenen Regel bestimmt werden.

3. PRACH-Wiederholungsübertragungsverfahren gemäß Anspruch 1, wobei die Vielzahl von ROs K RO-Ressourcen in mindestens einer Assoziierungsperiode sind; und
eine Assoziierungsperiode eine Zeit ist, die erforderlich ist, um mindestens eine SSBzu-RO-Zuordnung innerhalb eines Satzes vorgegebener Zeitperioden zu vollziehen; wobei K eine ganze Zahl größer als 1 ist.

4. PRACH-Wiederholungsübertragungsverfahren gemäß Anspruch 3, wobei ein mit einer RO assoziierter SSB in jeder Assoziierungsperiode der gleiche ist oder ein mit einer RO assoziierter SSB in jeder RO-Zuordnungsperiode der gleiche ist; und
eine RO-Zuordnungsperiode eine Zeit ist, die erforderlich ist, um eine RO-zu-SSB-Zuordnung innerhalb eines Satzes vorgegebener Zeitperioden zu vollziehen.

5. PRACH-Wiederholungsübertragungsverfahren gemäß Anspruch 1, wobei das Verfahren ferner Folgendes beinhaltet:
Bestimmen einer temporären Direktzugriffsfunknetzkennung, RA-RNTI (Random Access Radio Network Temporary Identifier), auf der Basis des RO-Satzes; und
Überwachen, auf der Basis der RA-RNTI, einer Direktzugriffsantwortnachricht, RAR-Nachricht, die von einer netzwerkseitigen Vorrichtung (12) gesendet wird; wobei das Bestimmen einer RA-RNTI auf der Basis des RO-Satzes eines der Folgenden beinhaltet:
Bestimmen der RA-RNTI auf der Basis einer Referenz-RO in dem RO-Satz; und
Bestimmen der RA-RNTI auf der Basis von Parametern des RO-Satzes.

6. PRACH-Wiederholungsübertragungsverfahren gemäß Anspruch 5, wobei die Referenz-RO eine der Folgenden beinhaltet:
die erste RO der Vielzahl von ROs;
die letzte RO der Vielzahl von ROs; und
eine RO, die von der netzwerkseitigen Vorrichtung (12) angegeben wird.

7. Ein PRACH-Wiederholungsübertragungsverfahren, das von einer netzwerkseitigen Vorrichtung (12) durchgeführt wird und Folgendes beinhaltet:
Überwachen (700) einer Präambel eines physikalischen Direktzugriffskanals, PRACH, auf einer Vielzahl von Direktzugriffskanalgelegenheiten, ROs, die in einem RO-Satz beinhaltet sind; wobei
das Verfahren ferner Folgendes beinhaltet:
Erhalten von Parametern des RO-Satzes und Bestimmen des RO-Satzes auf der Basis der Parameter des RO-Satzes; wobei
die Parameter des RO-Satzes Folgendes beinhalten: eine Frequenzressource, in der sich eine für die PRACH-Wiederholungsübertragung verwendbare RO befindet; wobei die Parameter des RO-Satzes mindestens eines der Folgenden erfüllen:
ein Indexwert eines Synchronisationssignalblocks, SSB, der mit der Vielzahl von ROs assoziiert ist, erfüllt, dass ein Wert von mod(SSB-Index, M) gleich groß ist, wobei M eine ganze Zahl ist und M ein vordefinierter Wert ist; und
Frequenzpositionen der Vielzahl von ROs sind gleich.

8. PRACH-Wiederholungsübertragungsverfahren gemäß Anspruch 7, wobei das Verfahren ferner Folgendes beinhaltet:
Senden einer ersten Nachricht an ein Endgerät (11), wobei die erste Nachricht zum Angeben der Parameter des RO-Satzes verwendet wird; oder
Bestimmen der Parameter des RO-Satzes gemäß einer vorgegebenen Regel.

9. PRACH-Wiederholungsübertragungsverfahren gemäß Anspruch 7, wobei die Vielzahl von ROs K RO-Ressourcen in mindestens einer Assoziierungsperiode sind; und
eine Assoziierungsperiode eine Zeit ist, die erforderlich ist, um mindestens eine SSBzu-RO-Zuordnung innerhalb eines Satzes vorgegebener Zeitperioden zu vollziehen; wobei K eine ganze Zahl größer als 1 ist.

10. PRACH-Wiederholungsübertragungsverfahren gemäß Anspruch 7, wobei das Verfahren ferner Folgendes beinhaltet:
Bestimmen einer temporären Direktzugriffsfunknetzkennung, RA-RNTI, auf der Basis des RO-Satzes; und
Senden einer Direktzugriffsantwortnachricht, RAR-Nachricht, auf der Basis der RA-RNTI; wobei
das Bestimmen einer RA-RNTI auf der Basis des RO-Satzes eines der Folgenden beinhaltet:
Bestimmen der RA-RNTI auf der Basis einer Referenz-RO in dem RO-Satz; und
Bestimmen der RA-RNTI auf der Basis von Parametern des RO-Satzes.

11. PRACH-Wiederholungsübertragungsverfahren gemäß Anspruch 10, wobei die Referenz-RO eine der Folgenden beinhaltet:
die erste RO der Vielzahl von ROs;
die letzte RO der Vielzahl von ROs; und
eine RO, die von der netzwerkseitigen Vorrichtung (12) angegeben wird.

12. Ein PRACH-Wiederholungsübertragungsapparat (800), der Folgendes beinhaltet:
eine Übertragungseinheit (810), die konfiguriert ist, um eine Präambelwiederholungsübertragung eines physikalischen Direktzugriffskanals, PRACH, auf einer Vielzahl von Direktzugriffskanalgelegenheiten, ROs, die in einem RO-Satz beinhaltet sind, durchzuführen; wobei
der Apparat (800) ferner Folgendes beinhaltet:
eine erste Bestimmungseinheit, die konfiguriert ist, um Parameter des RO-Satzes zu erhalten und den RO-Satz auf der Basis der Parameter des RO-Satzes zu bestimmen; wobei
die Parameter des RO-Satzes Folgendes beinhalten: eine Frequenzressource, in der sich eine für die PRACH-Wiederholungsübertragung verwendbare RO befindet; wobei die Parameter des RO-Satzes mindestens eines der Folgenden erfüllen:
ein Indexwert eines Synchronisationssignalblocks, SSB, der mit der Vielzahl von ROs assoziiert ist, erfüllt, dass ein Wert von mod(SSB-Index, M) gleich groß ist, wobei M eine ganze Zahl ist und M ein vordefinierter Wert ist; und
Frequenzpositionen der Vielzahl von ROs sind gleich.

13. PRACH-Wiederholungsübertragungsapparat (800) gemäß Anspruch 12, wobei die Parameter des RO-Satzes gemäß einer Konfiguration von einer netzwerkseitigen Vorrichtung und/oder gemäß einer vorgegebenen Regel bestimmt werden.

14. Ein PRACH-Wiederholungsübertragungsapparat (900), der Folgendes beinhaltet:
eine Überwachungseinheit (910), die konfiguriert ist, um eine Präambel eines physikalischen Direktzugriffskanals, PRACH, auf einer Vielzahl von Direktzugriffskanalgelegenheiten, ROs, die in einem RO-Satz beinhaltet sind, zu überwachen; wobei
der Apparat (900) ferner Folgendes beinhaltet:
eine zweite Bestimmungseinheit, die konfiguriert ist, um Parameter des RO-Satzes zu erhalten und den RO-Satz auf der Basis der Parameter des RO-Satzes zu bestimmen; wobei
die Parameter des RO-Satzes Folgendes beinhalten: eine Frequenzressource, in der sich eine für die PRACH-Wiederholungsübertragung verwendbare RO befindet; wobei die Parameter des RO-Satzes mindestens eines der Folgenden erfüllen:
ein Indexwert eines Synchronisationssignalblocks, SSB, der mit der Vielzahl von ROs assoziiert ist, erfüllt, dass ein Wert von mod(SSB-Index, M) gleich groß ist, wobei M eine ganze Zahl ist und M ein vordefinierter Wert ist; und
Frequenzpositionen der Vielzahl von ROs sind gleich.

15. PRACH-Wiederholungsübertragungsapparat (900) gemäß Anspruch 14, wobei der Apparat (900) ferner Folgendes beinhaltet:
eine erste Sendeeinheit, die konfiguriert ist, um eine erste Nachricht an ein Endgerät zu senden, wobei die erste Nachricht zum Angeben der Parameter des RO-Satzes verwendet wird; oder
eine dritte Bestimmungseinheit, die konfiguriert ist, um die Parameter des RO-Satzes gemäß einer vorgegebenen Regel zu bestimmen.

## Revendications

1. Un procédé de transmission à répétition PRACH, réalisé par un terminal (11) comprenant :
la réalisation (400) d'une transmission à répétition de préambule de canal d'accès aléatoire physique, PRACH, sur une pluralité d'occasions de canal d'accès aléatoire, RO, comprises dans un ensemble de RO ; où
le procédé comprend en outre :
l'obtention de paramètres de l'ensemble de RO, et la détermination de l'ensemble de RO sur la base des paramètres de l'ensemble de RO ; où
les paramètres de l'ensemble de RO comprennent : une ressource fréquentielle dans laquelle une RO utilisable pour une transmission à répétition PRACH est située ; où
les paramètres de l'ensemble de RO satisfont au moins à l'une des conditions suivantes :
une valeur d'indice d'un bloc de signaux de synchronisation, SSB, associé à la pluralité de RO satisfait à une valeur de mod(indice de SSB, M) qui est égale, où M est un entier et M est une valeur prédéfinie ; et
des positions fréquentielles de la pluralité de RO sont les mêmes.

2. Le procédé de transmission à répétition PRACH selon la revendication 1, où les paramètres de l'ensemble de RO sont déterminés selon une configuration provenant d'un dispositif côté réseau (12) et/ou selon une règle préétablie.

3. Le procédé de transmission à répétition PRACH selon la revendication 1, où la pluralité de RO sont K ressources de RO dans au moins une période d'association ; et
une période d'association est un temps requis pour effectuer au moins un mappage de SSB-à-RO au sein d'un ensemble de périodes de temps préétablies ; où K est un entier supérieur à 1.

4. Le procédé de transmission à répétition PRACH selon la revendication 3, où un SSB associé à une RO dans chaque période d'association est le même, ou un SSB associé à une RO dans chaque période de mappage de RO est le même ; et
une période de mappage de RO est un temps requis pour effectuer un mappage de RO-à-SSB au sein d'un ensemble de périodes de temps préétablies.

5. Le procédé de transmission à répétition PRACH selon la revendication 1, où le procédé comprend en outre :
la détermination d'un identifiant temporaire de réseau radio d'accès aléatoire, RA-RNTI, sur la base de l'ensemble de RO ; et
la surveillance, sur la base du RA-RNTI, d'un message de réponse d'accès aléatoire, RAR, envoyé par un dispositif côté réseau (12) ; où
la détermination d'un RA-RNTI sur la base de l'ensemble de RO comprend l'une des étapes suivantes :
la détermination du RA-RNTI sur la base d'une RO de référence dans l'ensemble de RO ; et
la détermination du RA-RNTI sur la base de paramètres de l'ensemble de RO.

6. Le procédé de transmission à répétition PRACH selon la revendication 5, où la RO de référence comprend l'un des éléments suivants :
la première RO de la pluralité de RO ;
la dernière RO de la pluralité de RO ; et
une RO indiquée par le dispositif côté réseau (12).

7. Un procédé de transmission à répétition PRACH, réalisé par un dispositif côté réseau (12) comprenant :
la surveillance (700) d'un préambule de canal d'accès aléatoire physique, PRACH, sur une pluralité d'occasions de canal d'accès aléatoire, RO, comprises dans un ensemble de RO ; où
le procédé comprend en outre :
l'obtention de paramètres de l'ensemble de RO, et la détermination de l'ensemble de RO sur la base des paramètres de l'ensemble de RO ; où
les paramètres de l'ensemble de RO comprennent : une ressource fréquentielle dans laquelle une RO utilisable pour une transmission à répétition PRACH est située ; où
les paramètres de l'ensemble de RO satisfont au moins à l'une des conditions suivantes :
une valeur d'indice d'un bloc de signaux de synchronisation, SSB, associé à la pluralité de RO satisfait à une valeur de mod(indice de SSB, M) qui est égale, où M est un entier et M est une valeur prédéfinie ; et
des positions fréquentielles de la pluralité de RO sont les mêmes.

8. Le procédé de transmission à répétition PRACH selon la revendication 7, où le procédé comprend en outre :
l'envoi d'un premier message à un terminal (11), où le premier message est utilisé pour indiquer les paramètres de l'ensemble de RO ; ou
la détermination des paramètres de l'ensemble de RO selon une règle préétablie.

9. Le procédé de transmission à répétition PRACH selon la revendication 7, où la pluralité de RO sont K ressources de RO dans au moins une période d'association ; et
une période d'association est un temps requis pour effectuer au moins un mappage de SSB-à-RO au sein d'un ensemble de périodes de temps préétablies ; où K est un entier supérieur à 1.

10. Le procédé de transmission à répétition PRACH selon la revendication 7, où le procédé comprend en outre :
la détermination d'un identifiant temporaire de réseau radio d'accès aléatoire, RA-RNTI, sur la base de l'ensemble de RO ; et
l'envoi d'un message de réponse d'accès aléatoire, RAR, sur la base du RA-RNTI ; où
la détermination d'un RA-RNTI sur la base de l'ensemble de RO comprend l'une des étapes suivantes :
la détermination du RA-RNTI sur la base d'une RO de référence dans l'ensemble de RO ; et
la détermination du RA-RNTI sur la base de paramètres de l'ensemble de RO.

11. Le procédé de transmission à répétition PRACH selon la revendication 10, où la RO de référence comprend l'un des éléments suivants :
la première RO de la pluralité de RO ;
la dernière RO de la pluralité de RO ; et
une RO indiquée par le dispositif côté réseau (12).

12. Un appareil de transmission à répétition PRACH (800), comprenant :
une unité de transmission (810), configurée pour réaliser une transmission à répétition de préambule de canal d'accès aléatoire physique, PRACH, sur une pluralité d'occasions de canal d'accès aléatoire, RO, comprises dans un ensemble de RO ; où
l'appareil (800) comprend en outre :
une première unité de détermination, configurée pour obtenir des paramètres de l'ensemble de RO, et déterminer l'ensemble de RO sur la base des paramètres de l'ensemble de RO ; où
les paramètres de l'ensemble de RO comprennent : une ressource fréquentielle dans laquelle une RO utilisable pour une transmission à répétition PRACH est située ; où les paramètres de l'ensemble de RO satisfont au moins à l'une des conditions suivantes :
une valeur d'indice d'un bloc de signaux de synchronisation, SSB, associé à la pluralité de RO satisfait à une valeur de mod(indice de SSB, M) qui est égale, où M est un entier et M est une valeur prédéfinie ; et
des positions fréquentielles de la pluralité de RO sont les mêmes.

13. L'appareil de transmission à répétition PRACH (800) selon la revendication 12, où les paramètres de l'ensemble de RO sont déterminés selon une configuration provenant d'un dispositif côté réseau et/ou selon une règle préétablie.

14. Un appareil de transmission à répétition PRACH (900), comprenant :
une unité de surveillance (910), configurée pour surveiller un préambule de canal d'accès aléatoire physique, PRACH, sur une pluralité d'occasions de canal d'accès aléatoire, RO, comprises dans un ensemble de RO ; où
l'appareil (900) comprend en outre :
une deuxième unité de détermination, configurée pour obtenir des paramètres de l'ensemble de RO, et déterminer l'ensemble de RO sur la base des paramètres de l'ensemble de RO ; où
les paramètres de l'ensemble de RO comprennent : une ressource fréquentielle dans laquelle une RO utilisable pour une transmission à répétition PRACH est située ; où
les paramètres de l'ensemble de RO satisfont au moins à l'une des conditions suivantes :
une valeur d'indice d'un bloc de signaux de synchronisation, SSB, associé à la pluralité de RO satisfait à une valeur de mod(indice de SSB, M) qui est égale, où M est un entier et M est une valeur prédéfinie ; et
des positions fréquentielles de la pluralité de RO sont les mêmes.

15. L'appareil de transmission à répétition PRACH (900) selon la revendication 14, où l'appareil (900) comprend en outre :
une première unité d'envoi, configurée pour envoyer un premier message à un terminal, où le premier message est utilisé pour indiquer les paramètres de l'ensemble de RO ; ou
une troisième unité de détermination, configurée pour déterminer les paramètres de l'ensemble de RO selon une règle préétablie.
